# Europäisches Patentamt
# European Patent Office
# Office européen des brevets

(11) Veröffentlichungsnummer: **0 049 768**
**B1**

(12) **EUROPÄISCHE PATENTSCHRIFT**

(45) Veröffentlichungstag der Patentschrift: **24.04.85**

(51) Int. Cl.⁴: **C 08 J 9/00, C 08 J 9/14**

(21) Anmeldenummer: **81107284.2**

(22) Anmeldetag: **16.09.81**

(54) **Elastische Duroplast-Schaumstoffe.**

(30) Priorität: **04.10.80 DE 3037683**

(43) Veröffentlichungstag der Anmeldung:
**21.04.82 Patentblatt 82/16**

(45) Bekanntmachung des Hinweises auf die
Patenterteilung:
**24.04.85 Patentblatt 85/17**

(84) Benannte Vertragsstaaten:
**BE DE FR GB IT NL SE**

(56) Entgegenhaltungen:
**EP-A-0 017 671**
**EP-A-0 017 672**
**EP-A-0 031 513**
**DE-A-2 461 661**
**GB-A-1 001 465**
**GB-A-1 088 626**
**US-A-4 165 413**

**Die Akte enthält technische Angaben, die nach
dem Eingang der Anmeldung eingereicht
wurden und die nicht in dieser Patentschrift
enthalten sind.**

(73) Patentinhaber: **BASF Aktiengesellschaft
Carl-Bosch-Strasse 38
D-6700 Ludwigshafen (DE)**

(72) Erfinder: **Mahnke, Harald, Dr.
Osloer Weg 48
d-6700 Ludwigshafen (DE)**
Erfinder: **Woerner, Frank Peter, Dr.
Am Altenbach 18
D-6706 Wachenheim (DE)**
Erfinder: **Weber, Heinz, Dr.
Am Wehrhaus 26
D-6718 Gruenstadt (DE)**

(56) Entgegenhaltungen:
**CHEMICAL ABSTRACTS, Band 90, Nr. 20, 14.
Mai 1979, Seite 35, Zusammenfassung Nr.
153105w Columbus, Ohio, U.S.A. V.M.
BOBRYASHOV et al.: "Super-high-frequency
energy in the technology of sandwich units"**

Courier Press, Leamington Spa, England.

## Beschreibung

Die Erfindung betrifft elastische Duroplast-Schaumstoffe mit Ausnahme von solchen auf Basis von Aminoplasten.

Duroplaste zeichnen sich gegenüber Elastomeren und Thermoplasten durch eine bessere Wärmestandfestigkeit, einen niedrigen Heizwert und ein günstiges Brandverhalten aus. Dies gilt auch für Schaumstoffe aus Basis von Duroplasten. Andererseits ist das mechanische Niveau reiner Duroplaste oft recht niedrig, es sind meist wenig elastische und spröde Materialien. Man hat daher vielfach versucht, Duroplaste durch Zusatz langkettiger Elastomerer zu elastifizieren. Darunter leiden aber im allgemeinen wiederum die Wärmestandfestigkeit.

In DE—A—24 61 661 und US—A—4 165 413 sind Schaumstoffe auf Basis von Phenolharzen beschrieben. Diese zeigen eine geringe Wiedererholung bei Stauchung und einen kleinen Biegeweg beim Bruch; sie sind daher für viele Anwendungszwecke nicht ausreichend elastisch. Es handelt sich um verhältnismäßig stark offenzellige Schäume.

Der Erfindung lag die Aufgabe zugrunde, Schaumstoffe auf Basis von Duroplasten zu entwickeln, die nicht mehr spröde, sondern verhältnismäßig elastisch sind, die aber andererseits ein hohes mechanisches Niveau aufweisen.

In den deutschen Patentanmeldungen DE—A—29 15 457 und DE—A—29 50 289 sind elastische Schaumstoffe auf Basis von Melamin- und Harnstoff-Formaldehyd-Kondensaten, sowie Verfahren zu ihrer Herstellung beschrieben. Die Elastifizierung erfolgt dort nicht auf chemischem, sondern auf physikalischem Weg, indem Schaumstoffe mit einer ganz besonderen, neuartigen Schaumstruktur geschaffen wurden. Es wurde nun gefunden, daß sich dieses Prinzip ganz allgemein auf Schaumstoffe auf Basis von Duroplasten übertragen läßt.

Gegenstand der vorliegenden Erfindung sind elastische Schaumstoffe auf Basis von duroplastischen Phenolharzen oder duroplastischen Polyurethanen (ausgenommen Aminoplastschaumstoffe nach DE—A—29 15 457 und DE—A—29 50 289), dern Schaumgerüst im wesentlichen aus einer Vielzahl miteinander verbundener, dreidimensional verzweigter Zellstege besteht. Die Schaumstoffe sind durch folgende Eigenschaften gekennzeichnet:

a) das mittlere Länge zu Dicke-Verhältnis der Zellstege ist größer als 10:1;

b) der prozentuale Anteil M der Zellmembranen, die im Schaumgerüst zwischen den Zellstegen intakt geblieben sind, ist kleiner als 40%;

c) der prozentuale Anteil P der Poren am Volumen der Zellstege ist kleiner als 15%.

Die in Frage kommenden Phenolharze und Polyurethane sind Duroplaste nach DIN 7724.

Bevorzugt sind Phenol/Formaldehyd-Polykondensate mit einem Molverhältnis Phenol: Formaldehyd von 1:1,4 bis 1:3,0, vorzugsweise von 1:1,5 bis 1:2,8, insbesondere hochkondensierte, sehr reaktive Phenolharze, die auf Grund ihrer hydrophoben Eigenschaften eine geringe Wasserverdünnbarkeit aufweisen. Ferner sind hochvernetzte Polyurethan-Hartschäum auf Basis von Isocyanaten und Polyolen mit einer OH-Zahl von größer als 300 bevorzugt.

Es handelt sich um sogenannte offenzellige Schäume, bei denen des Schaumgerüst im wesentlichen aus einer Vielzahl miteinander verbundener, dreidimensional verzweigter Zellstege besteht. Sie sind erfindungsgemäß durch drei Eigenschaften gekennzeichnet:

a) Das mittlere Länge zu Dicke-Verhältnis der Stege ist größer als 10:1, vorzugsweise größer als 15:1 und insbesondere größer als 25:1.

Das mittlere 1: d-Verhältnis wird mikroskopisch bestimmt, wobei die Steglänge und -dicke nach einem statistischen Auszählverfahren ermittelt werden. Als Steglänge ist der Abstand zwischen den Mittelpunkten zweier Knotenstellen und als Stegdicke die Dicke an der schmälsten Stelle eines Stegs, jeweils gemessen an der mikroskopischen Aufnahme definiert (s. Zeichnung). Bei der Auswertung werden nur diejenigen Stege berücksichtigt, die in der Bildebene liegen. Ein Duroplast-Schaumstoff ist nur dann ausreichend elastisch, wenn durch die Schäumbedingungen dafür gesorgt wird, daß verhältnismäßig lange Zellstege entstehen.

b) Der prozentuale Anteil M der Zellmembranen, die im Schaumgerüst zwischen den Zellstegen intakt geblieben sind, ist kleiner als 40%, vorzugsweise kleiner als 30% und insbesondere kleiner als 10%. Bei einem geschlossenzelligen Schaum besteht das Schaumgerüst aus einer Vielzahl von Zellen, die vollständig von Zellwänden (Membranen) umschlossen sind (Membrananteil 100). Je mehr Membranen beim Schäumvorgang platzen, desto offenzelliger wird ein Schaum. Im Extremfall enthält das Schaumgerüst überhaupt keine Membranen mehr, sondern besteht ausschließlich aus miteinander verbundenen, dreidimensional verzweigten Zellstegen (Membrananteil 0). Membrane versteifen einen Schaumstoff erheblich. So ist ein Duroplast-Schaumstoff mit Membrananteil 100 sehr spröde, während bei Membrananteil 0 der Schaumstoff hochelastisch ist, ohne daß die Dichte der beiden Schaumstoffe sich wesentlich unterscheidet.

Der Membrananteil läßt sich durch eine mikroskopische Betrachtung des Schaumgerüsts abschätzen. Eine exaktere Messung erfolgt über die spezifische Oberfläche die unmittelbar vom Membrananteil abhängt. Dazu mißt man die spezifische Oberfläche des Probeschaumes $\sigma_x$, diejenige eines vollständig geschlossenzelligen Schaumes $\sigma_{100}$ und eines vollständig offenzelligen Schaumes $\sigma_o$, wobei die Basis für die Schäume jeweils der gleiche Duroplast ist. Der Membrananteil läßt sich dann durch die Formel

$$M = \frac{\sigma_x - \sigma_o}{\sigma_{100} - \sigma_o} \cdot 100$$

errechnen.

c) Der prozentuale Anteil P der Poren am Volumen der Zellstege ist kleiner als 15%, vorzugsweise kleiner als 10% und insbesondere kleiner als 5%. Bei einem hohen Porenanteil befinden sich im Innern der Stege kleine Hohlräume, Blasen, die von einem Sekundärschäumvorgang, der sich im Innern der Stege abspielt, herrühren. Je höher der Porenanteil ist, desto spröder werden die Schaumstoffe. Die Sekundärverschäumung muß also möglichst unterdrückt werden. Eine exakte Messung des Porenanteils erfolgt über die Dichte. Dazu mißt man die Dichte des ungeschäumten Duroplasten $\rho_{100}$ und die Dichte der Zellstege $\rho_x$. Letztere läßt sich dadurch ermitteln, daß man eine Schaumstoffprobe in eine geeignete Flüssigkeit, z.B. Isopropanol hängt, wobei sie sich aufgrund ihrer Offenzelligkeit mit der Flüssigkeit vollsaugt, welche die im Innern der Zellen befindliche Luft verdrängt. Die Stegdichte $\rho_x$ kann dann nach dem archimedischen Prinzip bestimmt werden. Der Porenanteil ergibt sich aus der Formel

$$P = \frac{\rho_{100} - \rho_x}{\rho_{100}} \cdot 100$$

Das mittlere 1: d-Verhältnis der Zellstege, der Membrananteil und der Porenanteil lassen sich durch geeignete Wahl der Konzentration der Lösung des Duroplastvorprodukts, der Art und Menge der Treibmittel, des Emulgator- und des Härter-Systems einstellen.

Das Verfahren zur Herstellung der erfindungsgemäßen Schaumstoffe geht aus von einer möglichst hochkonzentrierten—vorzugsweise wäßrigen—Lösung oder Dispersion des Duroplastproduktes, in der ein Emulgator und ein Härter gelöst sind, und ein Treibmittel dispergiert ist. Wesentlich ist, daß das Treibmittel mit dem Lösungsmittel nicht mischbar ist, so daß sich mit Hilfe eines gut wirksamen Emulgatorsystems eine stabile Emulsion ausbildet, bei der feine Treibmitteltröpfchen mit stabilen Grenzflächen in der Lösungsmittelphase homogen verteilt sind. Eine feinteilige und stabile Emulsion ist Voraussetzung für ein hohes 1: d-Verhältnis bei den Zellstegen. Das zugesetzte Härtersystem muß in der Lage sein, bei Temperaturerhöhung eine Polymerisation bzw. Vernetzung des Duroplastvorprodukts zu bewirken. Dies wird als Gelieren bezeichnet; die Temperatur, bei der das Gelieren eintritt, ist die Geltemperatur. Art und Konzentration von Lösungsmittel, Treibmittel und Härter sind nun so aufeinander abzustimmen, daß der Siedepunkt des Treibmittels unter dem Siedepunkt des Lösungsmittels liegt, und daß die Geltemperatur dazwischen liegt. Beim Erhitzen der Ausgangsmischung verdampft dann zunächst das Treibmittel und bewirkt ein Aufschäumen, wobei sich zunächst eine geschlossenzellige Schaumstruktur ausbildet. Dann beginnt unter starker Viskositätserhöhung die Gelierung, wobei sich die Zellstege stabilisieren. Es ist wichtig, daß dieser Viskositätsanstieg erst dann einsetzt, wenn der Schäumvorgang im wesentlichen beendet ist. Ausführlich sind diese Zusammenhänge in der DE—A—29 15 457 bei Melamin/Formaldehyd-Kondensationsprodukten beschrieben. Die dort beschriebenen Bedingungen gelten auch bei anderen Duroplasten. Bei weiterer Temperaturerhöhung verdampft dann in verstärktem Maße auch das Lösungsmittel, das vorzugsweise Wasser ist. Dadurch werden die Zellmembranen zum Platzen gebracht. Damit der Membrananteil möglichst gering wird, soll das Lösungsmittel als Sekundärtreibmittel wirken. Andererseits darf es aber nicht zu stark wirksam werden, da es auch für die unerwünschte Sekundärverschäumung im Innern der Zellstege verantwortlich ist. Diese Sekundärverschäumung macht sich mikroskopisch betrachtet in einer Trübung der Zellstege bemerkbar, die bereits bei einem sehr geringen Porenanteil (um 1%) opak werden. Man steuert nun den Schäum- und Härtungsvorgang so, daß dieser Opazitätspunkt gerade erreicht wird. Dann ist einerseits der Membrananteil durch Platzen der Zellmembranen bereits sehr niedrig geworden, andererseits ist aber auch der Porenanteil durch Sekundärverschäumung noch recht gering. Der Opazitätspunkt für jedes einzelne System läßt sich durch Vorversuche leicht ermitteln. Man kann die Sekundärverschäumung vor allem dadurch unterbinden, daß man dafür sorgt, daß der Härtungsvorgang rasch abläuft. Dies kann einmal durch die Auswahl eines hochwirksamen Härtersystems, zum andern durch eine rasche Energiezufuhr, z.B. durch dielektrische Strahlung geschehen. Am besten bewährt hat sich die Ultrahochfrequenz-Bestrahlung mit Mikrowellen, wie sie in der DE—A—30 11 769 beschrieben ist. Das schnelle Härten des Duroplastvorproduktes bewirkt, daß sich gerade noch in den sehr dünnen Zellmembranen infolge des verdampfenden Lösungsmittels Bläschen bilden können, die zum Platzen der Membrane führen, daß aber die verhältnismäßig dünnen Zellstege bereits so sehr stabilisiert sind, daß hier eine wesentliche Porenbildung nicht mehr eintritt.

Zu den Ausgangsstoffen ist folgendes zu sagen:

Bevorzugtes Lösungsmittel für das Duroplast-Vorprodukt ist Wasser, grundsätzlich können jedoch auch andere Lösungsmittel, wie z.B. Alkohole, eingesetzt werden.

Die wäßrige Lösung bzw. Dispersion enthält eine flüchtige organische Verbindung als Treibmittel, vorzugsweise mit einem Siedepunkt zwischen −20 und 100°C, insbesondere zwischen +20 und +90°C. In Frage kommen z.B. Kohlenwasserstoffe, halogenierte Kohlenwasserstoffe, Ketone, Äther und Ester. Bevorzugte Treibmittel sind Pentan, Hexan, Trichlorfluormethan und Trichlortrifluormethan. Die Menge des eingesetzten Treibmittels beträgt bevorzugt 1 bis 40, vorzugsweise 5 bis 30 Gew.%, bezogen auf das Duroplastvorprodukt. Bei Pentan sind es vorzugsweise 5 bis 15 Gew.%, bei Trichlorfluormethan 15 bis 25 Gew.%, bei Trifluortrichloräthan 25 bis 35 Gew.%.

Die Lösung bzw. Dispersion des Harzes enthält einen Emulgator, vorzugsweise in einer Menge von 0,2 bis 7 Gew.-% und insbesondere von 1,0 bis 4,0 Gew.%, bezogen auf das Harz. Der Emulgator erniedrigt in der wäßrigen Dispersion bzw. Lösung die Grenzflächenspannung zwischen der hydrophilen Harz/Wasser-Phase und dem organischen hydrophoben Treibmittel und ermöglicht damit eine homogene Emulgierung beider Phasen. Außerdem setzt er die Oberflächenspannung der Lösung bzw. Dispersion herab und erleichtert dadurch die mit dem Schäumprozeß verbundene kontinuierliche Bildung neuer Oberflächen. Er bewirkt also eine Stabilisierung des Systems und verhindert, daß sich dieses während des Schäumvorgangs entmischt, was einen inhomogenen Schaum zur Folge hätte. Hierfür eignen sich besonders Emulgatorsysteme, deren einer Partner hauptsächlich für die Erniedrigung der Grenz- bzw. Oberflächenspannung verantwortlich ist, während der andere Partner mehr die Rolle eines Schutzkolloids übernimmt, d.h., die Grenzfläche stabilisiert.

Als Tenside eignen sich besonders anionenaktive, aber auch nichtionische Verbindungen, wie z.B. Metallsalze, vorzugsweise Natriumsalze von Alkyl- und Arylsulfonaten mit 8 bis 20 C-Atomen im Alkyl- bzw. Arylrest. Daneben sind geeignet: Salze von Sulfobernsteinsäureestern, sulfierten Ricinusölen, Schwefelsäureestern, z.B. von $C_{12}$—$C_{18}$-Alkylhydrogensulfaten und $C_{16}$—$C_{18}$-Fettalkoholhydrogensulfaten bzw. von sulfatierten ethoxylierten Fettalkoholen mit 5 bis 150 Molen Ethylenoxid pro Mol Fettalkohol, sowie nichtionische Verbindungen, wie ethoxylierte Talgfettalkohole und andere ethoxylierte Alkohole oder Säuren, wie z.B. Stearylsäure sowie Isooctylphenol und Rizinusöl. Für hydrophile Harzsysteme sind dabei mehr die anionenaktiven Tenside, für weniger wasserverträgliche Duroplast-Vorprodukte sind mehr die nichtionischen Tenside geeignet. Als Schutzkolloid eignen sich z.B. Polyvinylalkohol, Alkalisalze, sulfatierter hochethoxylierter Alfole (Ziegler-Alkohole) und Polyethylenglykole.

Für Duroplast-Vorprodukte, die mit Formaldehyde kondensiert sind, d.h., insbesondere für Phenolharze werden als Härter Verbindungen eingesetzt, die unter Reaktionsbedingungen Protonen abspalten oder bilden, welche dann die Weiterkondensation des Harzes katalysieren. In Frage kommen anorganische und organische Säuren, z.B. Schwefelsäure, Phosphorsäure, Ameisensäure, Essigsäure, Oxalsäure, Milchsäure, Aminosäuren und Amindosulfonsäuren sowie latente Härter, wie Halogencarbonsäuresalze, Chloressigsäureamid, Hydrogenphosphate, Säurenanhydride und Ammoniumsalze. Bei der Wahl des optimalen Härters ist die erwünschte Säurestärke und die Verträglichkeit mit den übrigen Komponenten des Systems zu berücksichtigen. Während bei Aminoplastharzen Ameisensäure besonders geeignet ist, ist bei Phenolharzen p-Toluolsulfonsäure bevorzugt. In manchen Fällen, vor allem wenn Korrosionsprobleme oder Verarbeitungsmaschinen im Vordergrund stehen, kann auch Phosphorsäure der bevorzugte Härter sein.

Bei Hartpolyurethan-Schaumstoffen werden als Härter Schwermetallsalze eingesetzt, z.B. Zinkstearat oder Zinndilaurylsulfat, ferner stark basische Amine, wie Diazabicyclooctan, Pyridin, Methylpyridin, N,N'-Dimethylpiperazin, N,N'-Dimethylbenzylamin. Mengen meist unterhalb von 1% sind hier wirksam. In größeren Dosierungen angewandt, führen insbesondere Triazine zu Di- bzw. Trimerisierungen der Isocyanatgruppen, wobei dann Polyisocyanurate entstehen. Diese Tendenz wird noch verstärkt, wenn man bestimmte Metallsalze, wie $FeCl_3$, $ZnCl_2$, $SnCl_2$ oder Zinnisooctoat oder organische Metallkomplexe, wie Eisen- und Zinkacetylacetonat oder Dibutylzinndilaurat zusetzt. Strebt man Carbodimidisierung an, so sind als Katalysatoren geringe Mengen aus Phospholenoxiden oder -sulfiden zuzusetzen.

Die Menge der einzusetzenden Härter ist so zu bemessen, daß die Gelierung erst dann einsetzt, wenn der Schäumvorgang im wesentlichen beendet ist, d.h., wenn der Schaum annähernd seine maximale Steighöhe erreicht hat.

Die wäßrige Lösung bzw. Dispersion des Duroplast-Vorproduktes ist vorzugsweise frei von weiteren Zusatzstoffen. Für manche Zwecke kann es jedoch günstig sein, bis zu 20 Gew.%, vorzugsweise weniger als 10 Gew.%, bezogen auf das Vorprodukt, üblicher Zusatzstoffe, wie faser- oder pulverförmiger anorganischer Verstärkungsmittel oder Füllstoffe, Pigmente, Farbstoffe, Flammschutzmittel, Weichmacher, Mittel zur Herabsetzung der Brandgastoxizität oder zur Förderung der Verkohlung zuzusetzen. Da die Schaumstoffe offenporig sind und Wasser aufnehmen können, kann es für manche Anwendungszwecke notwendig sein, Hydrophobierungsmittel in Mengen von 0,2 bis 5 Gew.% zuzusetzen. In Frage kommen dabei z.B. Alkylphenole mit 5 bis 15 C-Atomen im Alkylrest, Silikone und Paraffine.

In einer bevorzugten Ausführungsform der Herstellung der erfindungsgemäßen Duroplast-Schaumstoffe werden diese nach dem Schäumen und Aushärten 1 bis 180 min, vorzugsweise 5 bis 60 min lang auf Temperaturen zwischen 100 und 280, vorzugsweise zwischen 150 und 250°C erhitzt, wobei Reste des Lösungs- und Treibmittels, sowie gegebenenfalls flüchtige Spaltprodukte weitgehend entfernt werden.

Bei Beachtung der angegebenen Kriterien lassen sich für jeden beliebigen Duroplast-Schaumstoff optimale Herstellbedingungen ermitteln. Duroplast-Schaumstoffe, welche die kennzeichnenden Merkmale a, b und c aufweisen, zeichnen sich durch hohe Elastizität, gute mechanische Stabilität und niedrige Dichte aus.

Sie sind charakterisiert durch folgende Eigenschaften:

Die Rohdichte nach DIN 53 420 liegt zwischen 1,6 und 80, vorzugsweise zwischen 2 und 60 [g.l$^{-1}$]; die Wärmeleitzahl nach DIN 52 612 ist

kleiner als 0,06, vorzugsweise kleiner als 0,04 [$W.m^{-1}.°K^{-1}$]; bei stauchung des Schaumstoffs gemäß DIN 53 577 auf 60% erfolgt eine Wiedererholung auf mindestens 80%, vorzugsweise auf über 90% seiner ursprünglichen Höhe; der Biegeweg beim Bruch nach DIN 53 423 ist größer als 10, vorzugsweise größer als 15 mm.

Das Hauptanwendungsgebiet der erfindungsgemäß hergestellten Schaumstoffe ist die Wärme- und Schalldämmung von Gebäuden und Gebäudeteilen, insbesondere von Zwischenwänden, aber auch von Dächern, Fassaden, Türen und Fußböden; weiterhin die Wärme- und Schalldämmung von Fahrzeugen und Flugzeugen, sowie die Tieftemperaturisolierung, z.B. von Kühlhäusern, Öltanks und Behältern von Flüssiggas. Weitere Anwendungsgebiete sind die Verwendung als isolierende Wandverkleidung, sowie als isolierendes und stoßhemmendes Verpackungsmaterial.

Die in den Beispielen genannten Teile, Prozente und Verhältnisse beziehen sich auf das Gewicht.

## Beispiel 1

Ein stark methylolgruppenhaltiges Resolharz wurde hergestellt aus Phenol, 50 %igem wäßrigen Formaldehyd (Molverhältnis Phenol: Formaldehyd 1:2,75) und 50 %iger wäßriger NaOH in äquimolarer Menge, bezogen auf Phenol. Dabei wurde das Phenol in der Natronlauge gelöst und der Formaldehyd bei 60°C bis 70°C zugegeben. Die Lösung wurde unter Rühren solange bei dieser Temperatur gehalten, bis eine neutral gestellte Probe mit Wasser nur noch im Verhältnis 1:0,6 verdünnbar war. Anschließend wurde die Lösung gekühlt, mit $H_2SO_4$ neutralisiert und mit n-Butanol ausgeschüttelt. Die Butanollösungen wurden im Vakuum eingedampft und das $Na_2SO_4$ durch Filtrieren abgetrennt. Die Restlösungen wurden im Vakuum weiter eingeengt.

50 g der entstandenen 94 %igen Lösung (Viskosität 320 d Pas) wurden mit 5 g 50 %igem Formaldehyd, 5 g 70 %iger p-Toluolsulfonsäure als Härter und 2,4 g eines ethoxylierten Rizinusöls (®Cremophor EL der BASF AG) als Emulgator vermischt. In dieser Lösung wurden 20 g Trichlortrifluorethan als Treibmittel unter starkem Rühren emulgiert. Dieses schaumfähige Gemisch wurde auf den Boden einer Form aufgetragen und durch Ultrahochfrequenzbestrahlung mit Mikrowellen nach dem Beispiel 1 der Patentanmeldung P 30 11 769.2 verschäumt und ausgehärtet.

Es entstand ein sehr feinzelliger Schaum mit folgenden Eigenschaften:

Rohdichte nach DIN 53 420:     8 [$g.cm^{-3}$]

Wärmeleitzahl nach
DIN 52 612:     0,039 [$W.m^{-1}.°K^{-1}$]

Wiedererholung bei Stauchung
auf 60% nach DIN 53 577:     90%

Biegung bei Bruch nach
DIN 53 423:     15 mm

Das mittlere 1: d-Verhältnis, mikroskopisch bestimmt, beträgt 13:1.

Der Porenanteil P beträgt 1,4%. Er wurde folgendermaßen bestimmt: Gemessen wurde die Dichte des ungeschäumten Phenolharzes $\rho_{100}$ und die Dichte der Zellstege $\rho_x$ nach dem archimedischen Prinzip, wobei die Masse der Probe in Luft $m_L$ und in Isopropanol $m_J$ gemessen wurde.

Die Differenz $m_L - m_J$, dividiert durch die Dichte von Isopropanol von 0,785 [$g.cm^{-3}$] ergibt das Volumen V der zu bestimmenden Substanz. $m_L$ dividiert durch dieses Volumen V ergibt dann schließlich die gesuchte Dichte. Dabei ergaben sich folgende Werte:

$\rho_{100}=1,435$ [$g.cm^{-3}$]
$\rho_x=1,42$ [$g.cm^{-3}$].

Aus diesen Werten wurde dann nach der Formel

$$P=\frac{\rho_{100}-\rho_x}{\rho_{100}} \cdot 100$$

der Porenanteil P berechnet.

Der Membrananteil M beträgt 28%. Er wurde aus den spezifischen Oberflächen des Probeschaum $\sigma_x$, eines vollständig geschlossenzelligen Schaums $\sigma_{100}$ und eines vollständig offenzelligen Schaums $\sigma_o$ ermittelt. Die spezifischen Oberflächen wurden in Anlehnung an DIN 66 312 durch Stickstoffadsorption bestimmt. Der vollständig geschlossenzellige Schaum wurde folgendermaßen hergestellt:

50 g einer 91 %igen Lösung eines niedrig kondensierten Resolharzes (mit Wasser noch im Verhältnis 1:4 verdünnbar) wurden mit 4 g Wasser, 5 g 70 %iger p-Toluolsulfonsäure, 2,9 g eines ethoxylierten Rizinusöls und 20 g Trichlortrifluorethan emulgiert, wie oben beschrieben aufgeschäumt und ausgehärtet. Die mikroskopische Betrachtung zeigt, daß der sprödharte Schaum vollständig geschlossenzellig ist.

Ein vollständig offenzelliger Phenoharzschaum stand nicht zur Verfügung, er wurde jedoch folgendermaßen simuliert. Nach Beispiel 1 der Patentanmeldung P 29 15 457.2 wurde ein vollständig offenzelliger Melaminharzschaum hergestellt. Dieser wurde derart mit einer 10 %igen Resollösung behandelt, daß seine Oberfläche vollständig benetzt war. Der Schaumstoff wurde dann getrocknet und bei Temperaturen oberhalb von 150°C gehärtet, so daß die Oberfläche des immer noch offenzelligen Schaums vollständig aus Phenolharz bestand.

Folgende spezifischen Oberflächen wurden gemessen:

$\sigma_x=10,12$ [$m^2.l^{-1}$]
$\sigma_{100}=12,2$ [$m^2.l^{-1}$]
$\sigma_o=4,8$ [$m^2.l^{-1}$].

Aus diesen Werten wurde dann nach der Formel

$$m = \frac{\sigma_{100} - \sigma_x}{\sigma_{100} - \sigma_o} \cdot 100$$

der Membrananteil berechnet.

Beispiel 2

80 g eines sprühgetrockneten pulverigen Melamin-Formaldehyd-Vorkondensats mit freien Methylolgruppen (Molverhältnis Melamin:Formaldehyd 1:3, Trübungspunkt einer 10 %igen Lösung bei 80°C) wurde in 35 g Wasser gelöst und mit 5 g eines 40 %igen wäßrigen $C_{15}$-Alkylsulfonats, 6 g eines 50 %igen wäßrigen, stark ethoxylierten sulfatierten Fettalkohols, 2 g 75 %iger wäßriger Ameisensäure, sowie 1 g eines Polysiloxans (®Tegostab 802 der Fa. Goldschmidt AG) als oberflächenaktives Mittel versetzt und zusammen mit 80 g eines Gemisches aus Diphenylmethandiisocyanaten und Polyphenyl-polymethylenpolyisocyanaten (Roh-MDI), 0,3 g Diazabicyclooctan und 20 g Trichlortrifluorethan emulgiert. Das schäumfähige Gemisch wurde auf den Boden einer Form aufgetragen und durch Mikrowellen-Bestrahlung aufgeschäumt und ausgehärtet. Der entstandene Schaumstoff hatte eine gleichmäßige, offene Zellstruktur. Folgende Eigenschaften wurden gemessen:

| | |
|---|---|
| Rochdichte: | 7,5 [g.cm³] |
| Wärmeleitzahl: | 0,040 [W.m⁻¹.°K⁻¹] |
| Wiedererholung bei Stauchung auf 60%: | 85% |
| Biegung beim Bruch: | 12 mm |
| mittleres 1:d-Verhältnis: | 12:1 |
| Porenanteil | 14% |

(mit $\rho_{100}$=1,43 g.cm⁻³ und $\rho_x$=1,23 g.cm⁻³) Membrananteil (mikroskopisch): ≪1%.

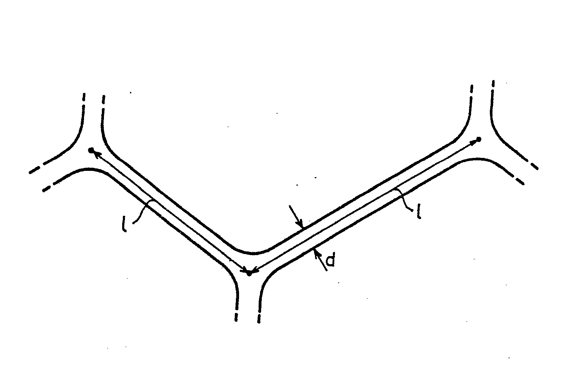

**Patentansprüche**

1. Elastische Schaumstoffe auf Basis von duroplastischen Phenolharzen oder duroplastischen Polyurethanen (ausgenommen Aminoplastschaumstoffe nach DE—A—29 15 457 und DE—A—29 50 289), deren Schaumgerüst im wesentlichen aus einer Vielzahl miteinander verbundener, dreidimensional verzweigter Zellsteg besteht, gekennzeichnet durch folgende Eigenschaften:

a) das mittlere Länge zu Dicke-Verhältnis der Zellstege ist größer als 10:1;

b) der prozentuale Anteil M der Zellmembranen, die im Schaumgerüst zwischen den Zellstegen intakt geblieben sind, ist kleiner als 40%;

c) der prozentuale Anteil P der Poren am Volumen der Zellstege ist kleiner als 15%.

2. Elastischer Schaumstoff nach Anspruch 1, dadurch gekennzeichnet, daß der Duroplast ein Phenol/Formaldehyd-Kondensationsprodukt mit einem Molverhältnis Phenol:Formaldehyd von 1:1,4 bis 1:3,0 ist.

3. Elastischer Schaumstoff nach Anspruch 1, dadurch gekennzeichnet, daß der Duroplast ein Polyurethan auf Basis von Isocyanaten und Polyolen mit einer OH-Zahl von größer als 300 ist.

**Revendications**

1. Matières expansées élastiques à base de résines phénoliques ou de polyuréthannes duroplastes (à l'exception des mousses d'aminoplastes selon les brevets DE—A—2 915 457 et DE—A—2 950 289), dont le squelette de la mousse est essentiellement constitué d'une multitude de ponts cellulaires à ramifications tridimensionnelles, reliés les uns aux autres, caractérisées par les caractéristiques ci-après:

a) le rapport entre la longueur moyenne et l'épaisseur des ponts cellulaires est supérieur à 10:1;

b) le pourcentage M des membranes cellulaires restées intactes entre les ponts cellulaires du squelette est inférieur à 40% et

c) le pourcentage P des pores dans le volume des points cellulaires est inférieur à 15%.

2. Matière expansée élastique selon la revendication 1, caractérisée en ce que le duroplaste est un produit de la condensation de phénol et d'aldéhyde formique avec un rapport molaire phénol-formaldéhyde de 1:1,4 à 1:3,0.

3. Matière expansée élastique selon la revendication 1, caractérisée en ce que le duroplaste est un polyuréthanne à base d'isocyanates et de polyols avec un indice OH supérieur à 300.

**Claims**

1. Resilient foams based on thermosetting phenolic resins or polyurethanes (excluding aminoplast foams according to German Laid-Open Applications DOS 2,915,457 and 2,950,289), whose foam structure consists essentially of a large number of interconnected, three-dimensionally branched struts, characterized by the following properties:—

(a) The mean length-to-thickness ratio of the struts is higher than 10:1;

(b) the percentage proportion M of the cell membranes which are left intact in the foam structure between the struts is less than 40%; and

(c) the percentage proportion P of the pores is less than 15% of the volume of the struts.

2. A resilient foam as claimed in claim 1, wherein the thermosetting resin is a phenol/formaldehyde condensate in which the molar ratio of phenol to formaldehyde is from 1:1.4 to 1:3.0.

3. A resilient foam as claimed in claim 1, wherein the thermosetting resin is a polyurethane based on isocyanates and polyols having an OH number of more than 300.